Europäisches Patentamt

European Patent Office

Office européen des brevets

(19)

(11) Numéro de publication : **0 486 354 A1**

# DEMANDE DE BREVET EUROPEEN

(12)

(21) Numéro de dépôt : **91402946.7**

(22) Date de dépôt : **05.11.91**

(51) Int. Cl.$^5$ : **G01S 5/16,** G01C 21/20

(30) Priorité : **16.11.90 FR 9014264**

(43) Date de publication de la demande :
**20.05.92 Bulletin 92/21**

(84) Etats contractants désignés :
**BE DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Couvignou, Philippe**
**22, Avenue des Huguenots**
**F-94420 Le Plessis Trevise (FR)**
Inventeur : **Kemeny, Andras**
**120, rue Lauriston**
**F-75116 Paris (FR)**

(54) **Procédé et dispositif de positionnement d'un véhicule avec recalage de l'angle de cap relatif.**

(57)    Procédé de positionnement d'un véhicule (1) en coordonnées curvilignes selon lequel on mesure en continu la vitesse linéaire V et la vitesse de giration ($\omega$) du véhicule, et on en déduit par intégration numérique la distance parcourue le long de la chaussée (3), l'écart du véhicule par rapport à l'arc central de la chaussée et le cap relatif $\alpha$ du véhicule par rapport à cet arc, caractérisé en ce que la dérive dans le temps de l'angle de cap relatif $\alpha$ est recalée régulièrement.

FIGURE 2

EP 0 486 354 A1

L'invention se rapporte au domaine technique de l'aide à la navigation des véhicules automobiles. Elle concerne plus particulièrement le positionnement d'un véhicule au cours de son déplacement.

Les systèmes d'aide à la navigation ont déjà fait l'objet de nombreuses publications. La publication FR 2507 314 décrit notamment un appareil perfectionné pour indiquer la route suivie par un véhicule. Celle-ci est exprimée à l'aide de coordonnées bidirectionnelles obtenues arithmétiquement à partir de la distance parcourue. La publication FR 2526 192 mentionne un autre appareil indicateur d'emplacement de véhicule, assurant le repérage de celui-ci à partir de ses coordonnées, et capable en outre de décrire son déplacement.

Les systèmes d'aide à la navigation sont d'autant plus efficaces, et par là même, les manoeuvres et les décisions du conducteur ou de son copilote électronique d'autant plus sûres, que les informations relatives à sa "position généralisée" (position proprement dite, vitesse, accélération) sont riches. On sait que parmi ces informations, la vitesse joue un rôle primordial. Dans l'objectif d'améliorer la détermination de la vitesse, l'invention propose un procédé et un dispositif de positionnement en coordonnées curvilignes, grâce auquel l'orientation et l'intensité du vecteur vitesse peuvent être connues à chaque instant avec exactitude.

Le procédé de positionnement d'un véhicule en coordonnées curvilignes faisant l'objet de l'invention consiste à mesurer en continu la vitesse linéaire et la vitesse de giration du véhicule, et à en déduire par intégration numérique la distance parcourue le long de la chaussée, l'écart latéral du véhicule par rapport à l'axe central de la chaussée, et le cap relatif du véhicule par rapport à la tangente locale à cet arc. Il est caractérisé en ce que la dérive dans le temps de l'angle de cap relatif du véhicule est recalée régulièrement.

Selon un mode de réalisation de l'invention, la vitesse linéaire et la vitesse de giration sont déterminées à partir des vitesses de rotation angulaire des quatre roues.

Selon un mode de réalisation de l'invention, le recalage de l'angle de cap relatif est obtenu grâce à des signaux de recalage, émis par des balises supportées par des portiques disposés régulièrement le long de la chaussée, et captés par des récepteurs embarqués sur le véhicule.

Selon un mode de réalisation de l'invention, le recalage de l'angle de cap relatif est obtenu à partir de la mesure des temps écoulés entre le captage du signal par les différents recepteurs et à partir de la vitesse du véhicule par rapport au sol

Selon un mode de réalisation de l'invention, la mesure des temps écoulés s'effectue par le comptage de tops émis selon une fréquence fixe.

L'invention concerne également un dispositif pour la mise en oeuvre de ce procédé, comportant un ensemble de trois récepteurs disposés sous le pare-brise du véhicule.

Selon un mode de réalisation de l'invention les trois récepteurs sont montés en triangle, les deux premiers récepteurs étant localisés à l'avant du véhicule de façon symétrique à gauche et à droite de l'axe longitudinal du véhicule, et le troisième récepteur étant localisé à l'arrière du véhicule, sur l'axe longitudinal.

Selon un mode de réalisation de l'invention, le dispositif comporte une horloge électronique, émettant des tops- selon une fréquence fixe.

Selon un mode de réalisation de l'invention le dispositif comporte deux compteurs de tops mesurant respectivement le temps écoulé entre le captage du signal par le récepteur avant gauche et par le récepteur arrière, et le temps écoulé entre le captage du signal par le récepteur avant droit et par le récepteur arrière.

Selon un mode de réalisation de l'invention le dispositif comporte un calculateur déterminant la valeur de l'angle de cap relatif à partir des mesures de temps écoulés.

Selon un mode de réalisation de l'invention, la tangente de l'angle de cap relatif calculée est proportionnelle au rapport de la différence entre le temps séparant le captage par le récepteur avant droit du captage par le récepteur arrière, et le temps séparant le captage par le récepteur avant gauche et le captage par le récepteur arrière, sur la somme de ces temps.

Selon un mode de réalisation de l'invention, le coefficient de proportionnalité est constant et égal à la cotangente du demi-angle entre les récepteurs avant et le récepteur arrière.

L'invention sera mieux comprise à la lecture de la description suivante d'un mode de réalisation de l'invention, en liaison avec les dessins annexés sur lesquels :

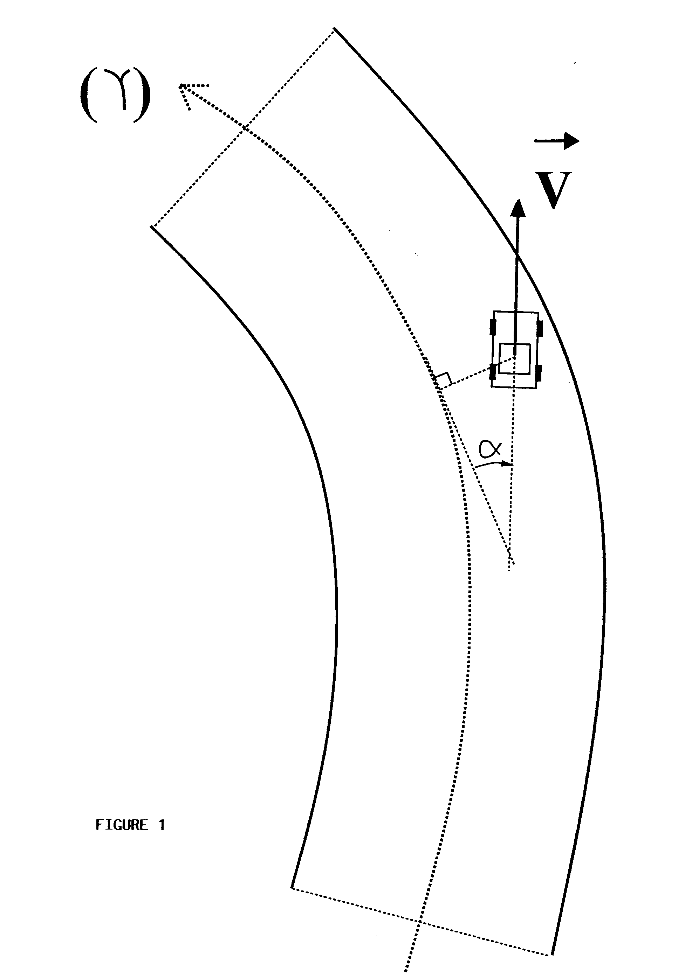

– la figure 1 définit l'angle du cap relatif du véhicule,
– la figure 2 illustre les données relatives à la position et à la vitesse du véhicule en coordonnées curvilignes,
– la figure 3 représente schématiquement un véhicule à l'approche d'une balise émettrice du signal infrarouge,
– la figure 4 situe l'emplacement des récepteurs sur les véhicules,
– la figure 5 explicite la détermination de l'angle de cap relatif,
– la figure 6 est un schéma fonctionnel de l'invention,
– la figure 7 fait apparaître la dérive du cap relatif au cours du temps et sa correction par les recalages successifs,

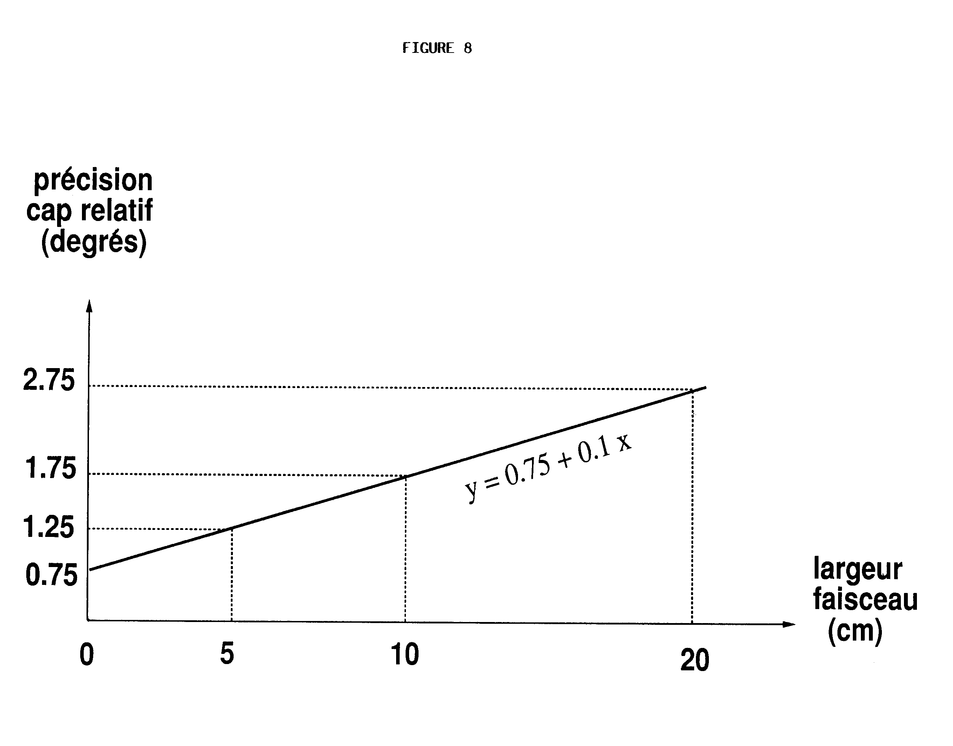

– la figure 8 indique les variations de la précision totale sur le cap en fonction de la largeur du faisceau infra-rouge,

– la figure 9 met en évidence l'incidence de la longueur du faisceau infra-rouge sur la précision des résultats obtenus,

– la figure 10 représente la plage de variation de l'angle $\alpha$.

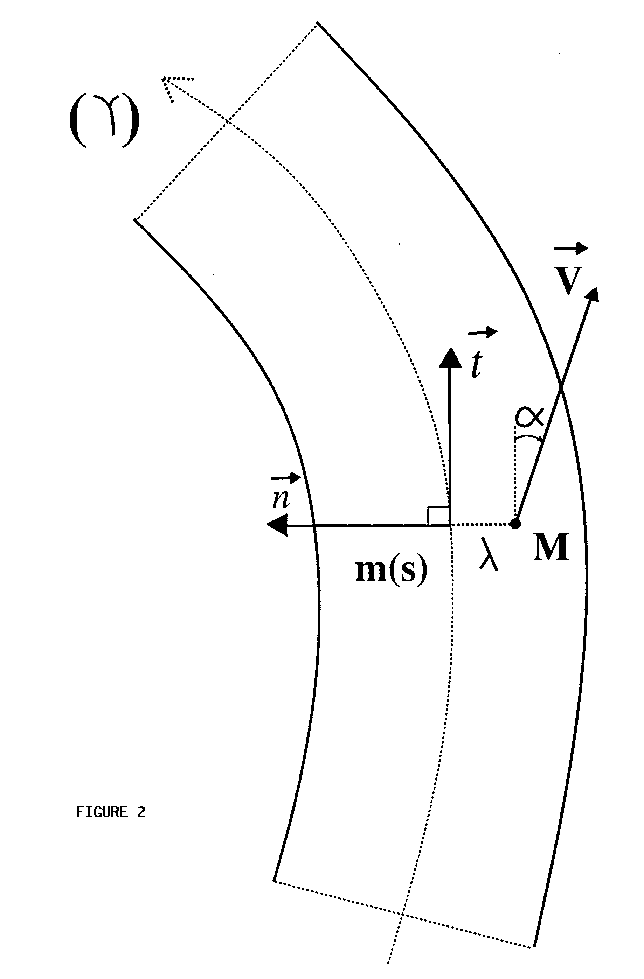

La figure 2 illustre les composantes de la position de la vitesse du véhicule en coordonnées curvilignes. Dans ce système de coordonnées, le véhicule est repéré relativement à la nappe géométrique formée par la surface de la route, à l'aide du quadruplet position, vitesse s, $\alpha$, $\lambda$, V, où

– s est la distance parcourue le long d'un arc ($\gamma$) de reférence depuis une certaine origine placée au début du tronçon routier

– $\lambda$ est l'écart latéral du véhicule relativement à, l'arc ($\gamma$) (positif à gauche, négatif à droite)

– $\alpha$ est la direction du véhicule relativement à la tangente locale à ($\gamma$)

– V est l'intensité de la vitesse linéaire du véhicule

Par construction, l'arc de reférence ($\gamma$) coïncide avec une des lignes de séparation des voies. Il est au milieu de la chaussée si le nombre de voies est pair. Les coordonnées curvilignes s'interprêtent de la façon suivante :

– s et $\lambda$ sont les positions longitudinales et latérales du véhicule

– $\alpha$ mesure l'orientation du véhicule par rapport aux voies, révélant ainsi les manoeuvres de changement de voie.

Le système de positionnement qui en découle nécessite la mesure en continu des deux quantités suivantes :

– l'intensité de la vitesse linéaire V (m/s)

– la vitesse de giration $\omega$ qui est la vitesse angulaire de lacet (rad/s).

En exploitant les mesures de vitesse angulaire des quatre roues, il est possible de déterminer l'intensité V de la vitesse linéaire, ainsi que la vitesse de giration. Par intégration numérique, on en déduit les quantités s, $\lambda$ et $\alpha$

Le cap relatif $\alpha$, est donc une valeur intégrée.

Pour cette raison, elle dérive avec le temps. Il en est de même de s et de $\lambda$.

De plus, le calcul des coordonnées de position s et $\lambda$, (qui dérivent elles aussi avec le temps) nécessite la connaissance en continu de l'angle $\alpha$. D'où la nécessité de recaler le cap régulièrement grâce à un ou des dispositifs extérieurs au véhicule.

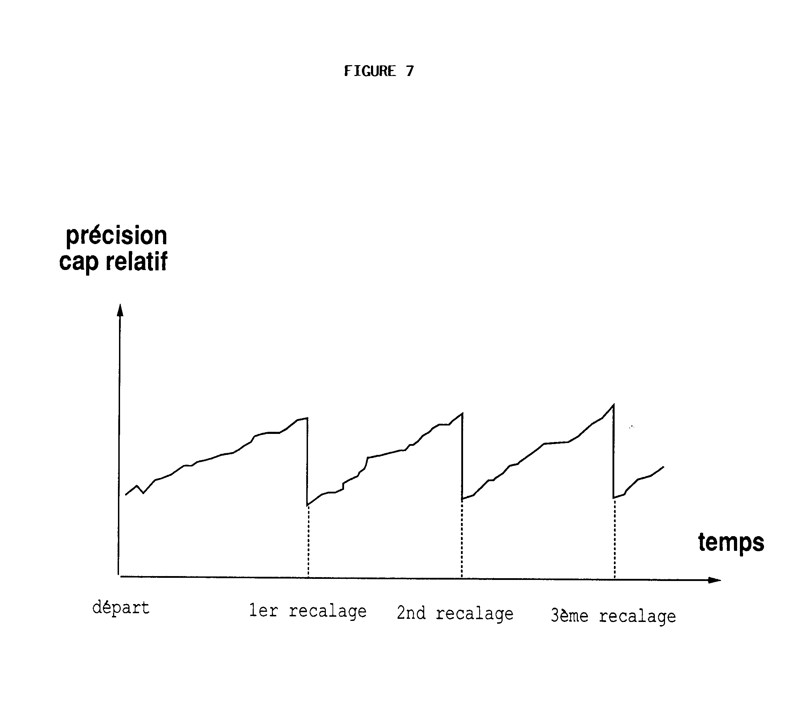

Cette dérive de la valeur du cap relatif calculée et sa correction par des recalages successifs est illustrée par la figure 7.

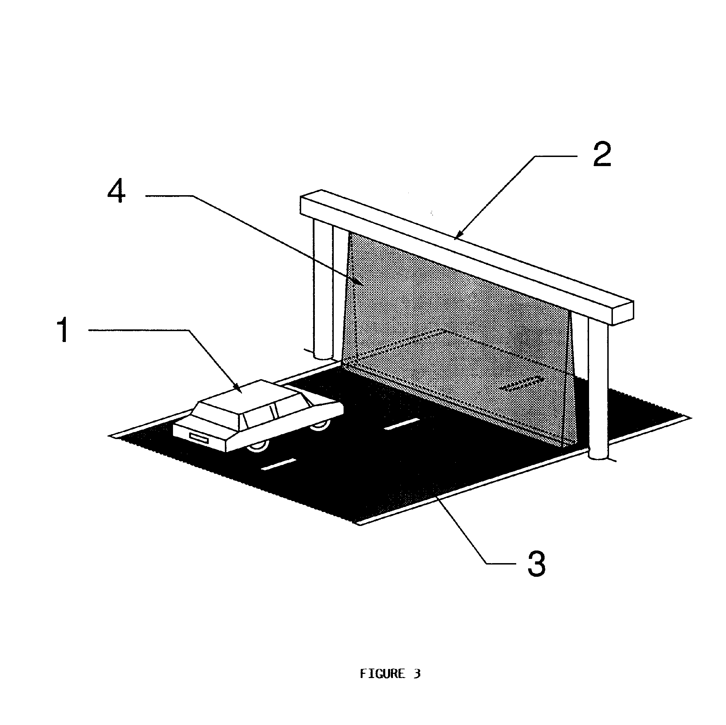

La figure 3 représente schématiquement un véhicule 1 parvenant à proximité d'un portique 2 disposé au dessus de la chaussée 3. Sur ce portique 2 est disposée une balise (non représentée). La balise émet un signal infra-rouge 4 vers les véhicules 1 passant à sa hauteur. Ce signal 4 émis perpendiculairement à la route et dont la largeur au sol est très faible (environ 10 cm) transporte un message de quelques octets.

Le signal est capté par des récepteurs miniatures 5 placés sous le pare-brise 7 du véhicule. La mise en oeuvre de l'invention suppose la disposition régulière de portiques 2 le long de la chaussée.

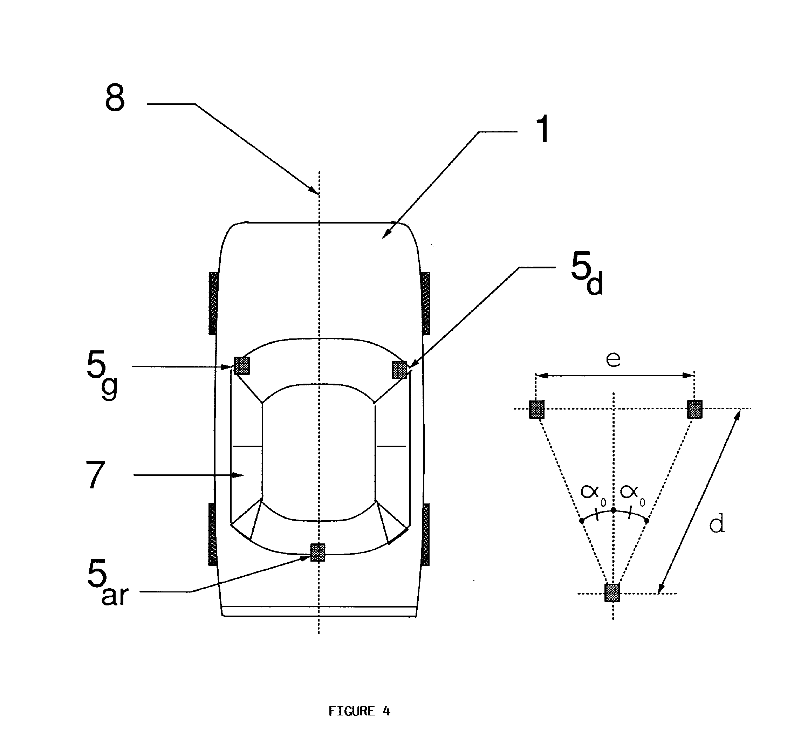

Sur la figure 4 on voit que le véhicule est équipé de trois récepteurs (5g, 5d, 5ar) disposés en triangle sous le pare-brise 7. Les deux récepteurs avant (5g, 5d) sont distants mutuellement d'une longueur e.

Ils sont placés de façon symétrique de part et d'autre de l'axe longitudinal 8 du véhicule. Le troisième récepteur (5ar), disposé à l'arrière du véhicule, est placé sur l'axe longitudinal 8.

Il est distant des deux récepteurs avant d'une longueur d. Sur cette figure, $\alpha_o$ désigne le demi-angle entre les récepteurs avant et le récepteur arrière. Par définition de l'angle $\alpha_o$, on a $\alpha_o = \text{Arc sin } \dfrac{e}{2d}$, ce qui peut aussi s'écrire par commodité $K_o = \text{cotg } \alpha_o$, $K_o$ étant alors une constante caractéristique de la disposition géométrique des trois récepteurs sur le véhicule.

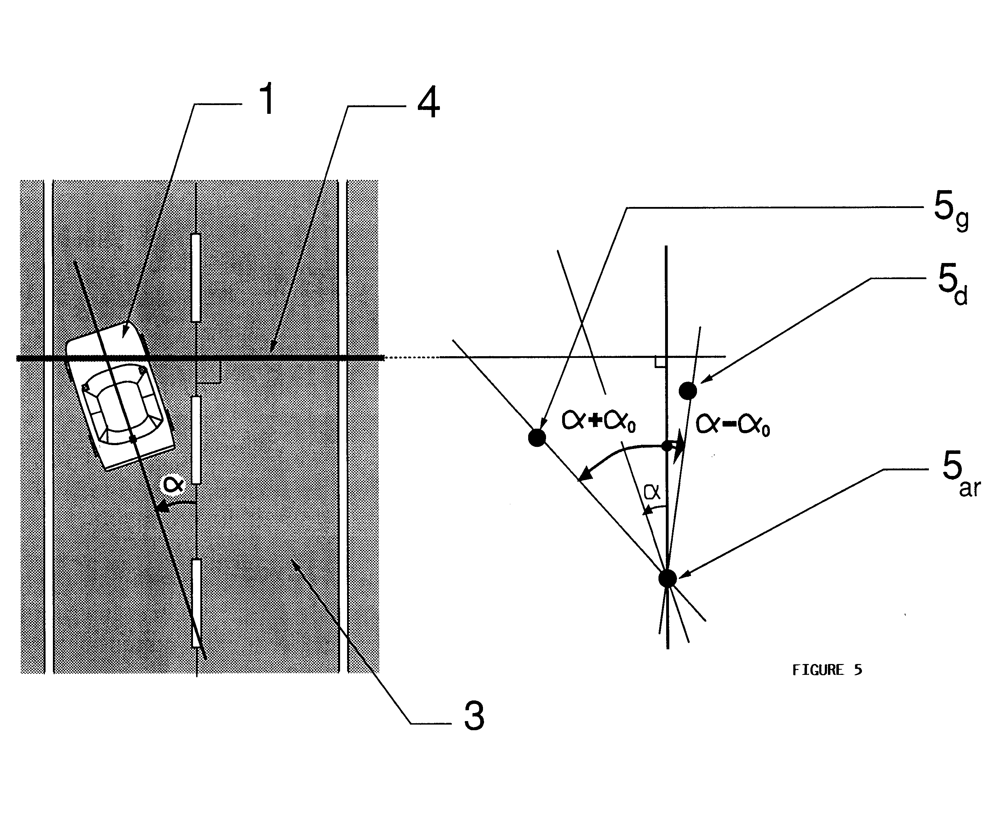

Sur la figure 5, apparaît l'angle $\alpha$ de cap relatif du véhicule 1. Le recalage de l'angle $\alpha$ est basé sur la mesure des durées $\tau_d$ et $\tau_g$ ainsi définies :

– $\tau_d$ est l'intervalle de temps qui sépare le captage du signal par le récepteur avant droit (5d) du captage par le récepteur arrière (5 ar),

– $\tau_g$ est l'intervalle de temps qui sépare le captage du signal par le récepteur avant gauche (5g) du captage par le récepteur arrière (5ar)

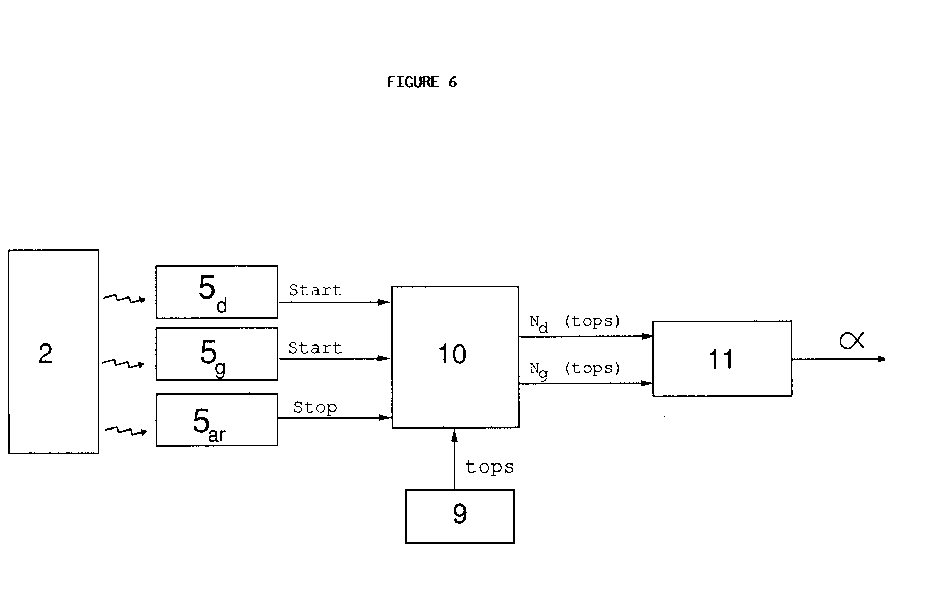

Les intervalles de temps $\tau_d$ et $\tau_g$ sont mesurés par le comptage de tops émis selon une fréquence fixe f par l'horloge électronique 9 mentionnée sur le schéma fonctionnel de la figure 6. Ce schéma fait en outre apparaître deux compteurs de tops 10 et un calculateur 11.

La vitesse linéaire V du véhicule doit être comprise entre deux valeurs extrêmes : Vmin et Vmax. Cette contrainte autorise le choix de compteurs de tops d'une capacité de 16 bits seulement. D'autres modes de réalisation de l'invention mettent en oeuvre des compteurs de capacité supérieurs à 16 bits, permettant des valeurs plus faibles pour la vitesse minimale Vmin.

En notant $N_d$ (respectivement $N_g$) le nombre de tops comptés pendant les durées $\tau_d$ (respectivement $\tau_g$), on a:

$$N_d = \tau_d \times f$$
$$N_g = \tau_g \times f$$

Puisque la valeur maximale des durées $\tau_d$ et $\tau_g$ est d/$V_{min}$, le nombre de tops vaut

$$N_{max} = \frac{d \times f}{V_{min}}$$

Numériquement, avec f = 20kHz, d = 3m et $V_{min}$ = 2m/s

$$N_{max} = \frac{3 \times 20000}{2} = 30000 \text{ tops}$$

La capacité des compteurs sera donc d'au moins 16 bits : 15 bits au moins pour le comptage et un bit pour indiquer les dépassements de capacité.

Le calcul effectué par le calculateur 10 repose sur les hypothèses suivantes, qui sont détaillées dans l'annexe 1, tandis que l'annexe 2 expose un calcul d'incertitude sur l'angle calculé :

– la vitesse V reste constante pendant les intervalles de temps $\tau_d$ et $\tau_g$
– la vitesse V a pour direction l'axe longitudinal du véhicule et son intensité est connue avec une bonne précision,
– l'angle $\alpha$ est borné entre deux valeurs extrêmes :

$$\alpha_{min} = \alpha_o - 90°$$

et

$$\alpha_{max} = 90° - \alpha_o,$$

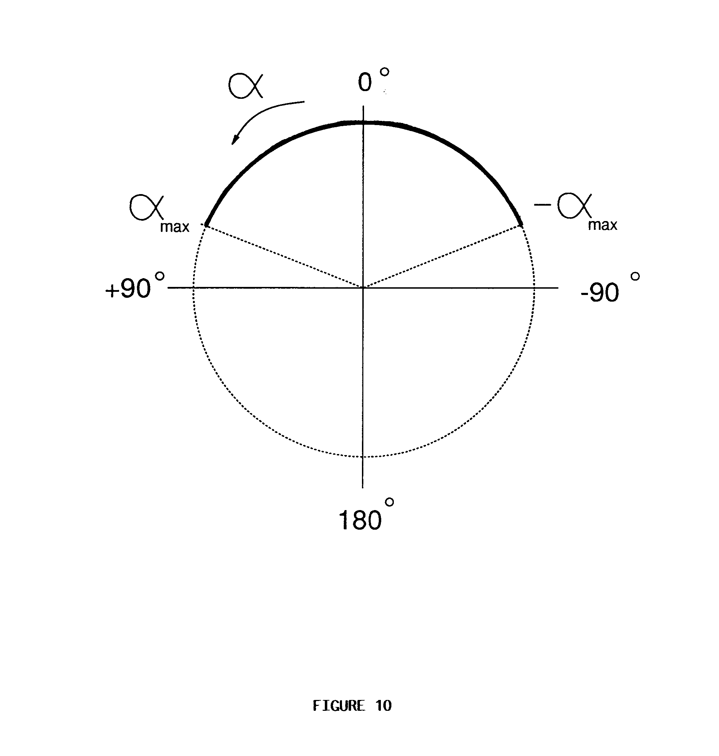

comme l'illustre la figure 10.

La figure 4 montre qu'en projetant la longueur d sur l'axe du véhicule, on obtient les distances qui séparent les réceptions du signal par les récepteurs avant 5d, 5ar de la réception par le récepteur arrière 5ar. Nous obtenons donc les deux équations suivantes (projections d'angles $\alpha - \alpha_o$ et $\alpha + \alpha_c$ ) :

$$\boxed{\begin{aligned} d\cos(\alpha - \alpha_0) &= V\tau_d \\ d\cos(\alpha + \alpha_0) &= V\tau_g \end{aligned}} \qquad (e)$$

D'où il vient :

$$\cos \alpha = \frac{V}{2d \cos \alpha_o} \times (\tau_d + \tau_g)$$

$$\sin \alpha = \frac{V}{2d \sin \alpha_o} \times (\tau_d - \tau_g)$$

Et donc :

$$\text{tg}\alpha = \text{cotg } \alpha_o \times \frac{\tau_d - \tau_g}{\tau_d + \tau_g}$$

On peut finalement écrire :

(E)

$$\boxed{\alpha = \text{Arctg} \left( K_0 \times \frac{\tau_d - \tau_g}{\tau_d + \tau_g} \right)}$$

Cette formule permet de calculer l'angle de cap relatif $\alpha$ à partir de $\tau_d$ et $\tau_g$ , ces durées étant mesurées électroniquement quand le véhicule franchit le faisceau Infra-Rouge. Le coefficient $K_o$ est une constante car il ne dépend que de la disposition géométrique des récepteurs dans l'habitacle.

## Annexe 1 : Hypothèse de cacul

On suppose que la vitesse V a pour direction l'axe longitudinal du véhicule (on néglige les dérapages transverses). On suppose également que l'intensité de la vitesse V reste constante et est connue à l'instant du recalage, avec une bonne précision.

Les compteurs de tops d'horloge ayant une capacité limitée, nous sommes contraints de limiter les valeurs de la vitesse entre deux bornes :

$$V_{min} \leqq V \leqq V_{max}$$

L'angle $\alpha$, à l'instant du recalage, est supposé borné :

$$|\alpha| \leqq \alpha \text{ max, avec } \alpha \text{ max } = 90 - \alpha_o$$

Valeurs numériques

Pour les calculs numériques, nous prendrons les valeurs suivantes :

d = 300cm

e = 120cm

et donc

$$\alpha_o = 0,20 \text{ (11,5 degrés)}$$

$$\text{et } \alpha_{max} = 1,31 \text{ (78 degrés)}$$

D'autre part, nous avons choisi les valeurs suivantes :

$$V_{max} = 50m/s \text{ (180 Km/h)}$$

$$V_{min} = 2m/s \text{ (7 Km/h)}$$

et pour borner la vitesse V et l'angle $\alpha$

$$\alpha_{max} = 15 \text{ degrés (0.26 radians)}$$

## Annexe 2 : Calcul d'incertitude

Les calculs d'incertitude sont opérés de façon classique, par différentiation et majoration "au pire". Nous allons donc calculer la différentielle $\delta\alpha$ à partir de la formule (E) puis majorer $|\delta\alpha|$.

La formule (E) s'écrit également

$$tg\alpha = K_o \times \frac{\tau_d - \tau_g}{\tau_d + \tau_g}$$

En différentiant cette équation, on obtient :

$$\delta(tg\ \alpha) = \delta K_o \times \frac{\tau_d - \tau_g}{\tau_d + \tau_g} + K_o \times \delta(\frac{\tau_d - \tau_g}{\tau_d + \tau_g}) \quad (1)$$

D'autre part, on sait que

$$\delta(tg\ \alpha) = (1 + tg^2\alpha = \times \delta\alpha \quad (2)$$

En éliminant $\delta\ (tg\ \alpha)$ entre les équations 1 et 2 :

$$\delta\alpha = \frac{\delta K_0 \times \frac{\tau_d - \tau_g}{\tau_d + \tau_g}}{1 + tg^2\ \alpha} + \frac{K_0 \times \delta\left(\frac{\tau_d - \tau_g}{\tau_d + \tau_g}\right)}{1 + tg^2\ \alpha}$$

En utilisant (E) :

$$\delta\alpha = \frac{tg\ \alpha}{1 + tg^2\ \alpha} \times \left(\frac{\delta K_0}{K_0} + \frac{\delta\left(\frac{\tau_d - \tau_g}{\tau_d + \tau_g}\right)}{\frac{\tau_d - \tau_g}{\tau_d + \tau_g}}\right)$$

$$|\ \delta\alpha\ |_{max} = |\ \frac{tg\ \alpha}{1 + tg^2\ \alpha}\ | \times \left(|\ \frac{\delta K_0}{K_0}\ | + |\ \frac{\delta\left(\frac{\tau_d - \tau_g}{\tau_d + \tau_g}\right)}{\frac{\tau_d - \tau_g}{\tau_d + \tau_g}}\ |\right)$$

Cette équation permet de calculer la contribution à l'incertitude sur le calcul du cap dûs aux différents termes qui apparaissent dans la formule (E).

Un calcul élémentaire de variations montre que, quelle que soit la valeur de l'angle $\alpha$ :

$$\left| \frac{tg\ \alpha}{1 + tg^2\alpha} \right| \leq \frac{1}{2} \quad (3)$$

On peut donc faire la majoration:

$$\left| \delta\alpha \right|_{max} \leq \frac{1}{2} \times \left( \left| \frac{\delta K_0}{K_0} \right| + \left| \frac{\delta\left(\frac{\tau_d - \tau_g}{\tau_d + \tau_g}\right)}{\frac{\tau_d - \tau_g}{\tau_d + \tau_g}} \right| \right) \quad (4)$$

soit encore :

$$\left| \delta\alpha \right|_{max} \leq \Delta\alpha_{Ko} + \Delta\alpha_\tau \quad (5)$$

en notant :

$$F = \frac{\tau_d - \tau_g}{\tau_d + \tau_g}$$

et

$\varepsilon_{Ko}$ = l'incertitude relative sur $K_o$,

$\varepsilon_F$ = l'incertitude relative sur F.

et les contributions à l'incertitude absolue sur l'angle $\alpha$:

$$\Delta\alpha_{Ko} = \frac{1}{2} \times \varepsilon_{Ko} \quad (6)$$

$$\Delta\alpha_\tau = \frac{1}{2} \times \varepsilon_F \quad (7)$$

## INCERTITUDE CAUSEE PAR LE FACTEUR $K_O$

Calculons la valeur de la précision relative $\varepsilon_{Ko}$ sur le facteur $K_o$.

L'angle $\alpha_o$ étant assez petit, on peut faire l'approximation

$$tg\ \alpha_o \approx \sin\ \alpha_o$$

et donc,

$$K_o = cotg\ \alpha_o \approx \frac{1}{\sin\ \alpha_o} = \frac{2d}{e}$$

soit :

$$K_o \approx \frac{2d}{e}$$

D'où par différentiation

$$\frac{\delta K_o}{K_o} \approx \frac{\delta d}{d} - \frac{\delta e}{e} \quad (8)$$

On peut raisonnablement supposer que les longueurs e et d sont précises à $\pm$ 0.5 %, ce qui revient à dire que les tolérances sur e et d sont inférieures respectivement à $\pm$ 3 mmm et $\pm$ 7 mm. L'incertitude relative sur le facteur $K_o$ étant la somme des incertitudes relatives sur d et e (d'après l'équation 8), elle vaut :

$$\left| \frac{\delta K_o}{K_o} \right| \approx \left| \frac{\delta d}{d} \right| + \left| \frac{\delta e}{e} \right| = 0.5\% + 0.5\% = 0.01$$

soit :

$$\varepsilon_{Ko} \approx 0.01$$

Finalement, l'incertitude absolue sur $\alpha$ due à $K_o$ vaut donc au maximum :

$$\Delta\alpha_{Ko} = \frac{1}{2} \times \varepsilon_{Ko} = 0.0050\ rad$$

$$\boxed{\Delta\alpha_{K_0} = 0.0050\ rad\ (0.29\ degrés)}$$

## INCERTITUDE CAUSEE PAR LES MESURES $\tau_d$ ET $\tau_g$

D'après les équations 5 et 7, l'incertitude absolue sur due aux mesures vaut:

6

$$\Delta \alpha_\tau = \frac{1}{2} \times \frac{\delta\left(\frac{\tau_d - \tau_g}{\tau_d + \tau_g}\right)}{\left(\frac{\tau_d - \tau_g}{\tau_d + \tau_g}\right)}$$

Soit $\Delta_\tau$ l'incertitude absolue sur les mesures des durées $\tau_d$ et $\tau_g$ Un rapide calcul montre que :

$$\left| \frac{\delta\left(\frac{\tau_d - \tau_g}{\tau_d + \tau_g}\right)}{\left(\frac{\tau_d - \tau_g}{\tau_d + \tau_g}\right)} \right| \leq 2 \times \frac{\Delta \tau}{\tau_d + \tau_g}$$

De plus, la valeur du cap $\alpha$ étant bornée par des valeurs relativement faibles, les deux équations de projection (e) permettent de faire l'approximation très grossière (mais très utile) :

$$\tau_d \approx \tau_g \approx \frac{d}{V}$$

D'où on tire

$$\frac{\Delta \tau}{\tau_d + \tau_g} \approx \frac{1}{2} \times \frac{\Delta \tau}{\tau} \approx \frac{1}{2} \times \left(\frac{\Delta d}{d} + \frac{\Delta V}{V}\right)$$

et donc

$$\Delta \alpha_\tau \approx \frac{1}{2} \times \left(\frac{\Delta d}{d} + \frac{\Delta V}{V}\right) \qquad (9)$$

Dans (9), le terme $\frac{\Delta V}{V}$ représente la variation relative de la vitesse pendant la durée de la mesure. Nous avons contraint la vitesse à ne pas varier de plus de 1 % pendant la mesure, ce qui veut dire:

$$\frac{\Delta V}{V} \leqq 0.01$$

Le terme $\frac{\Delta d}{d}$ de l'équation (9) représente l'incertitude relative sur la longueur d (voir figure 3) pour les mesures de temps et .Son origine est double :
– tolérance sur les dimensions e et d
– imprécision due à la largeur du faisceau infra-rouge.
Au paragraphe précédent, nous avons admis 0.5 % d'imprécision relative sur d (tolérance de construction) :

$$\left(\frac{\delta d}{d}\right)_{dimension} = 0.0050$$

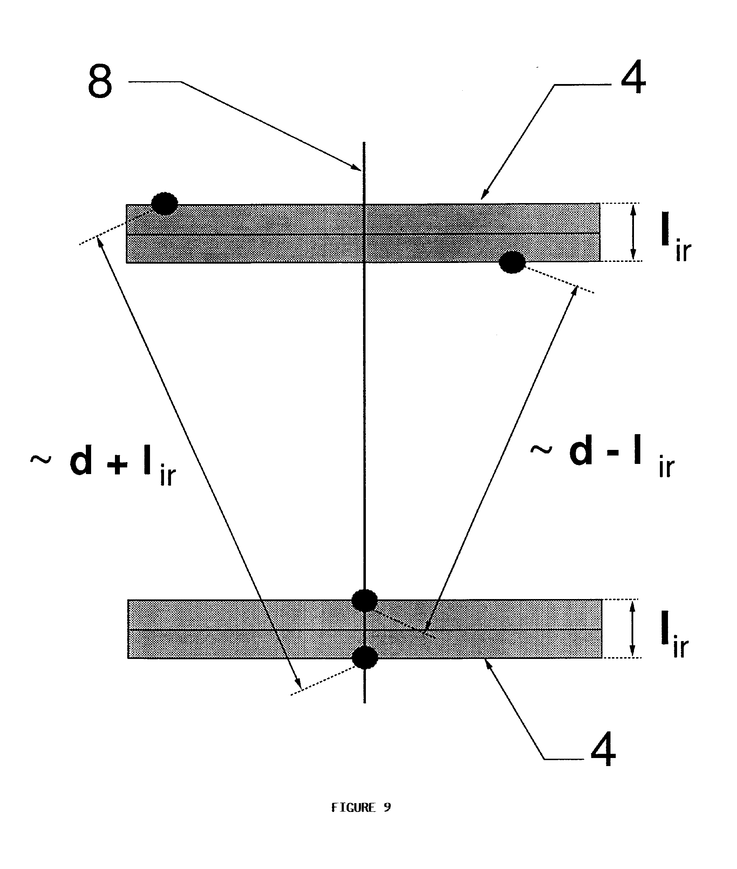

Quant à la part d'incertitude relative causée par la largeur non-nulle du faisceau, elle vaut (voir figure 9 ) :
l'incertitude absolue sur $\alpha$ vaut finalement :

$$\left(\frac{\delta d}{d}\right)_{faisceau} = \frac{l_{ir}}{d} = \frac{l_{ir}\,(\text{cm})}{300} = 0.0033 \times l_{ir}\,(\text{cm})$$

l'incertitude absolue sur $\alpha$ vaut finalement:

7

$$\Delta\alpha_r \approx \frac{1}{2} \times (0.0050 + 0.0033 \times l_{ir} \text{ (cm)} + 0.001)$$
$$\approx 0.0075 + 0.0017 \times l_{ir} \text{ (cm)}$$

Il reste à y ajouter la part d'incertitude relative due au comptage électronique (par tops d'horloge). Cette quantité a en effet été négligée dans les approximations conduisant à l'équation 9, ce que nous justifions maintenant.

Il suffit donc de mesurer les durées $\tau$ avec une précision absolue $\Delta_\tau$ d'au moins 50 micro-secondes pour que l'incertitude relative supplémentaire soit négligeable :

$$\Delta\tau < 50 \ \mu s \Rightarrow \frac{\Delta\tau}{\tau} < 0.00042$$

car $1/\tau$ vaut au maximum $V_{max}/d$ et $B_{max}$ a été fixée à 50 m/s au paragraphe 4 ($0.00042 = \frac{1}{2} \times 50.10^{-6} \times 50/3$).

Finalement nous prendrons :

$$\boxed{\Delta\alpha_r \text{ (rad)} = 0.0080 + 0.0017 \times l_{ir} \text{ (cm)}}$$

$$\boxed{\Delta\alpha_r \text{ (deg)} = 0.46 + 0.10 \times l_{ir} \text{ (cm)}}$$

| largeur faisceau $l_{ir}$ (cm) | | 0 | 5 | 10 | 15 | 20 |
|---|---|---|---|---|---|---|
| incertitude $\Delta\alpha_r$ ($10^{-2}$ rad) | | 0.80 | 1.65 | 2.5 | 3.35 | 4.2 |
| · (deg) | | 0.46 | 0.95 | 1.43 | 1.9 | 2.4 |

**Revendications**

[1] Procédé de positionnement d'un véhicule (1) en coordonnées curvilignes selon lequel on mesure en continu la vitesse linéaire V et la vitesse de giration $\omega$ du véhicule, et on en déduit par intégration numérique la distance s parcourue le long de la chaussée, l'écart du véhicule $\lambda$ par rapport à l'arc central de la chaussée et le cap relatif $\alpha$ du véhicule par rapport à cet arc, caractérisé en ce que la dérive dans le temps de l'angle $\alpha$ de cap relatif est recalée régulièrement.

[2] Procédé de positionnement selon la revendication 1 caractérisé en ce que la vitesse linéaire V et la vitesse de giration $\omega$ sont déterminées à partir des vitesses de rotation angulaire des roues.

[3] Procédé de positionnement selon la revendication 1 caractérisé en ce que le recalage de l'angle de cap relatif $\alpha$ est obtenu grâce à des signaux de recalage émis par des balises supportées par des portiques (2) disposés régulièrement le long de la chaussée, et captés par des récepteurs embarqués sur le véhicule.

[4] Procédé de positionnement selon la revendication 3 caractérisé en ce que le recalage de l'angle de cap relatif $\alpha$ est obtenu à partir de la mesure des temps écoulés entre le captage du signal par les différents récepteurs embarqués sur le véhicule, et à partir de la vitesse du véhicule par rapport au sol.

[5] Procédé de positionnement selon la revendication 4 caractérisé en ce que la mesure des temps écoulés s'effectue par le comptage de tops émis selon une fréquence fixe.

[6] Dispositif de positionnement pour la mise en oeuvre du procédé selon l'une quelconque des revendications précédentes caractérisé en ce qu'il comporte trois récepteurs (5g, 5d, 5ar) disposés sous le pare-brise du véhicule.

[7] Dispositif de positionnement selon la revendication 6, caractérisé en ce que les récepteurs (5g, 5d, 5ar) sont montés en triangle, les deux premiers (5g, 5d) étant localisés à l'avant du véhicule (1) de façon symétrique à gauche et à droite de l'axe longitudinal (8) du véhicule (1) et le troisième récepteurs (5ar) étant localisé à l'arrière du véhicule (1), sur l'axe longitudinal (8).

[8] Dispositif de positionnement selon la revendication 6, caractérisé en ce qu'il comporte une horloge électronique, émettant des tops selon une fréquence fixe f.

**[9]** Dispositif de positionnement selon la revendication 8, caractérisé en ce qu'il comporte deux compteurs de tops (10) mesurant respectivement le temps $\tau_g$ écoulé entre le captage du signal par le récepteur avant gauche (5g) et par le récepteur arrière (5ar), et le temps écoulé $\tau_d$ entre le captage du signal par le récepteur avant droit (5d), et par le récepteur arrière (5ar).

**[10]** Dispositif de positionnement selon la revendication 8, caractérisé en ce qu'il comporte un calculateur (11) déterminant la valeur de l'angle de cap relatif $\alpha$ à partir des mesures de temps écoulés $\tau_d$ et $\tau_g$

**[11]** Dispositif de positionnement selon la revendication 10, caractérisé en ce que la tangente de l'angle de cap relatif calculée tg$\alpha$ est proportionnelle au rapport de la différence entre le temps $\tau_a$, séparant le captage par le récepteur avant droit du captage par le récepteur arrière, et le temps $\tau_g$ séparant le captage par le récepteur avant gauche et le récepteur arrière, sur la somme de ces deux temps .

**[12]** Dispositif de positionnement selon la revendication 11, caractérisé en ce que le coefficient de proportionnalité $K_o$ est constant et égal à la cotangente du demi-angle $\alpha_o$ entre les récepteurs avant (5g, 5d) et le récepteur arrière (5ar).

FIGURE 1

FIGURE 2

FIGURE 3

FIGURE 4

FIGURE 5

FIGURE 6

$\propto$

11

$N_d$ (tops)

$N_g$ (tops)

10

tops

9

Start

Start

Stop

$5_d$

$5_g$

$5_{ar}$

2

FIGURE 7

EP 0 486 354 A1

**précision
cap relatif**

**temps**

départ          1er recalage    2nd recalage    3ème recalage

FIGURE 8

EP 0 486 354 A1

précision
cap relatif
(degrés)

largeur
faisceau
(cm)

$y = 0.75 + 0.1\,x$

2.75

1.75

1.25

0.75

0     5     10     20

FIGURE 9

FIGURE 10

**Office européen des brevets**

# RAPPORT DE RECHERCHE EUROPEENNE

Numero de la demande

EP    91 40 2946

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | NTZ NACHRICHTENTECHNISCHE ZEITSCHRIFT. vol. 36, no. 4, Avril 1983, BERLIN DE pages 214 - 218; E.P. NEUKIRSCHNER: 'EVA-Ortungs- und Navigationssystem für Landfahrzeuge' * paragraphe * figures 1,3,4 * | 1 | G01S5/16 G01C21/20 |
| A | EP-A-0 391 647 (SUMITOMO ELECTRIC INDUSTRIES) * page 5, ligne 10 - page 7, ligne 31; figure 4 * | 1 | |
| A | EP-A-0 357 515 (THOMSON-CSF) * page 7, ligne 15 - page 8, ligne 9; figures 10,11 * | 1 | |
| A | GB-A-2 169 725 (GENERAL ELECTRIC) * page 2, ligne 26 - ligne 52; figure 1 * | 1 | DOMAINES TECHNIQUES RECHERCHES (Int. Cl.5) G01S G01C |

Le présent rapport a été établi pour toutes les revendications

| Lieu de la recherche | Date d'achèvement de la recherche | Examinateur |
|---|---|---|
| LA HAYE | 14 FEVRIER 1992 | AUGARDE E.P.G.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)